Europäisches Patentamt

(19)   European Patent Office

Office européen des brevets

(11)   **EP 0 557 163 B1**

(12)   **FASCICULE DE BREVET EUROPEEN**

(45)   Date de publication et mention
de la délivrance du brevet:
**24.04.1996  Bulletin 1996/17**

(51)   Int. Cl.⁶: **C01B 21/068**

(21)   Numéro de dépôt: **93400330.2**

(22)   Date de dépôt: **09.02.1993**

(54)   **Procédé continu de préparation de nitrure de silicium par carbonitruration**

Kontinuierliches Verfahren zur Herstellung von Siliziumnitrid durch Karbonitridierung

Continuous process for the preparation of silicon nitride by carbonitridation

(84)   Etats contractants désignés:
**AT BE CH DE DK ES FR GB GR IE IT LI LU NL PT
SE**

(30)   Priorité: **18.02.1992 FR 9201806**

(43)   Date de publication de la demande:
**25.08.1993  Bulletin 1993/34**

(73)   Titulaire: **ELF ATOCHEM S.A.
F-92800 Puteaux (FR)**

(72)   Inventeurs:
• **Bachelard, Roland
F-69007 Lyon (FR)**

• **Disson, Jean-Pierre
F-69008 Lyon (FR)**
• **Morlhon, Bruno
F-69100 Lyon (FR)**

(56)   Documents cités:
**EP-A- 0 080 050            EP-A- 0 131 894
FR-A- 2 388 763            GB-A-   15 641
GB-A- 1 028 977**

• **DATABASE WPIL Week 8846, Derwent
Publications Ltd., London, GB; AN 88-325894/46
& JP-A-63 239 104.**

## Description

La présente invention a pour objet un procédé continu de préparation de nitrure de silicium par carbonitruration.

Le nitrure de silicium appartient à la famille des céramiques techniques. Les propriétés particulières du nitrure de silicium en font un matériau particulièrement approprié pour la fabrication d'objets destinés à être utilisés à des températures élevées, typiquement de 1000 à 1200°C. Les objets fabriqués à partir de nitrure de silicium sont obtenus par frittage à haute température, sous atmosphère d'azote, d'une poudre de nitrure de silicium, sous forme $\alpha$, à laquelle est classiquement ajouté un additif favorisant la densification. Les propriétés mécaniques des objets réalisés à partir de nitrure de silicium sont résistance mécanique, résistance aux chocs thermiques, dureté, résistance à l'usure élevée et donc ces objets sont largement utilisés dans tout type d'industrie. A titre d'exemples, le nitrure de silicium est utilisé pour la réalisation de patins de culbuteurs, de rotors de turbo-compresseurs, de préchambres de combustion de moteurs diesel dans l'industrie automobile, de roulements à billes, d'ajutages, de filières d'extrusion et d'outils de coupe.

Les procédés connus de synthèse à l'échelle industrielle de nitrure de silicium sont les suivants :

(i) Nitruration directe de silicium :

$$3 \text{ Si} + 2 \text{ N}_2 \dashrightarrow \text{Si}_3\text{N}_4$$

Cette réaction est très exothermique, difficile à contrôler et conduit à des poudres grossières qu'il est donc nécessaire de broyer avant de procéder au frittage.

(ii) Décomposition thermique d'un imide de silicium par exemple selon les schémas :

$$3 \text{ Si(NH)}_2 \dashrightarrow \text{Si}_3\text{N}_4 + 2 \text{ NH}_3$$

$$3 \text{ Si(NH}_2)_4 \dashrightarrow \text{Si}_3\text{N}_4 + 8 \text{ NH}_3$$

Cette réaction conduit à une poudre très fine mais néanmoins amorphe, qu'il est nécessaire de cristalliser à une température de 1300 à 1500°C.

(iii) Carbonitruration de silice :

$$3 \text{ SiO}_2 + 6 \text{ C} + 2 \text{ N}_2 \dashrightarrow \text{Si}_3\text{N}_4 + 6 \text{ CO}$$

Ce procédé présente l'avantage majeur d'utiliser des produits de départ de faible coût et de ne conduire à aucun effluent autre que CO, facilement brûlé. Néanmoins, la carbonitruration présente des inconvénients. La température de réaction doit être parfaitement contrôlée. Au delà de 1470°C, il existe des risques de formation de SiC. En dessous de 1400°C, il existe des risques de formation d'un produit mal cristallisé contenant beaucoup d'oxygéne. Au cours du procédé, il y a compétition entre la formation de deux formes cristallines de $\text{Si}_3\text{N}_4$, les formes $\alpha$ et $\beta$. La forme $\alpha$ est la forme recherchée, car c'est elle qui conduit aux corps frittés possédant les propriétés précitées. De plus, la granulométrie de la poudre est critique pour la mise en oeuvre du frittage; une granulométrie parfaitement contrôlée est donc nécessaire. Comme le procédé est mis en oeuvre sous un courant d'azote, il se produit souvent des entraînements de matières. Ces entraînements sont dus à la formation d'un intermédiaire SiO gaz, en abrégé $\text{SiO}_{(g)}$ qui peut, soit se dismuter à une température de 1000 à 1200°C en $\text{SiO}_2$ et Si d'où un encrassement de l'installation, soit conduire à la formation de cristaux en bâtonnets de $\text{Si}_3\text{N}_{4(w)}$, dits "whiskers" inaptes au frittage, selon vraisemblablement la réaction:

$$3 \text{ SiO}_{(g)} + 3 \text{ CO}_{(g)} + 2 \text{ N}_2 \dashrightarrow \text{Si}_3\text{N}_{4(w)} + 3 \text{ CO}_2$$

Afin de résoudre les problèmes précités, il a été proposé de nombreux procédés.

L'ajout d'amorces de cristallisation tel que décrit dans les brevets US-P-4 428 916 et FR-A 2 388 763 a permis de favoriser la production de poudres de $\text{Si}_3\text{N}_4$ sous forme $\alpha$ et d'une granulométrie contrôlée. Le contrôle de la granulométrie n'est cependant que partiellement obtenu et les problèmes de formation de sous-produits, notamment gazeux, demeurent.

L'ajout d'additifs, tel que décrit dans les brevets GB-A 1028977, EP-A 131894 facilite la mise en oeuvre du procédé de carbonitruration, notamment en ce qui concerne la formation de la forme $\alpha$ de $\text{Si}_3\text{N}_4$ et la granulométrie, comme ci-dessus, mais aussi permet l'emploi de produits de départ de dimensions plus grossières. De plus, cet ajout d'additif a une action catalytique sur la formation de nitrure de silicium. Ainsi, EP-A 131894 décrit et revendique un procédé de fabrication de poudre fine d'$\alpha$-$\text{Si}_3\text{N}_4$ par carbonitruration d'un mélange, préparé par addition de l'un au moins des additifs suivants: (a) un mélange d'au moins l'un des éléments Be, Mg, Ca, Sr, Ge, Sn, Ti, Hf et de composés de ceux-ci avec 0,01 à 1 partie en poids de poudre de nitrure de silicium, (b) un mélange de Zr et de composés de celui-ci avec 0 à 1 partie en poids de poudre de nitrure de silicium, dans une quantité totale de 0,001 à 0,1 partie en poids, calculée en termes de poids élémentaire(s) de Be, Mg, Ca, Sr, Ge, Sn, Ti, Hf et Zr et de 1 partie ou moins en poids de poudre de nitrure de silicium, à 1 partie en poids de poudre d'oxyde de silicium et à 0,4-4 parties en poids de poudre de carbone.

Malheureusement, le problème de la formation de sous-produits n'est pas résolu, et il est même aggravé, puisque des composés gazeux des additifs se forment et se condensent sur les parties froides du réacteur, ce qui conduit à des poudres de nitrure de silicium dont la teneur finale en ces additifs n'est pas contrôlée. Le frittage de ces poudres est donc rendu plus difficile. Par ailleurs, la technique décrite dans EP-A-131894 est un procédé batch (opérant par lots), non utilisable en continu du fait de l'accumulation des éléments mentionnés précédemment.

La demanderesse a trouvé, de façon surprenante et inattendue, que les problèmes ci-dessus sont obviés grâce à la présente invention.

Ainsi la présente invention a pour objet un procédé de fabrication de poudre fine de nitrure de silicium comprenant la réaction, à contre-courant d'azote, et en continu, de silice, carbone et amorce de cristallisation, en présence d'un composé volatil d'un métal choisi dans le groupe consistant en Be, Mg, Ca, Sr, Ge, Sn, Ti, Hf, Na et Ba, dans une zone réactionnelle présentant un gradient de température, comprenant une zone chaude dans laquelle ledit composé métallique passe à l'état gazeux et une zone froide dans laquelle se condense ledit composé métallique à l'état gazeux, ledit composé métallique à l'état gazeux étant entrainé de la zone chaude vers la zone froide par le contre-courant d'azote. Le terme "contre-courant d'azote" tel qu'utilisé dans la présente description désigne un courant d'azote ainsi qu'un courant contenant l'azote nécessaire à la réaction de carbonitruration dans un mélange avec un autre gaz inerte dans les conditions de réaction.

Le terme "silice", tel qu'utilisé dans la présente description désigne la silice elle-même $SiO_2$, ou un précurseur de $SiO_2$. Les précurseurs envisagés sont, à titre non limitatif, alkoxyde, alkyle ou alkylhalogénure de silicium, acide fluorosilicique, quartz, silicates de métaux mentionnés précédemment. Des mélanges de $SiO_2$, de précurseurs sont aussi envisagés dans la présente invention. La granulométrie de la silice n'est pas critique et toute forme est appropriée. De préférence, la silice est sous la forme $SiO_2$.

Le terme "carbone", tel qu'utilisé dans la présente description, désigne toute forme de carbone, c'est-à-dire, à titre non limitatif, le noir de carbone choisi parmi les grandes variétés de noirs, telles que carbone végétal, noir d'acétylène, noirs thermiques, noirs de fumée, graphite, coke, etc. Le terme "carbone" désigne aussi une substance précurseur de carbone. Une telle substance cokéfiable peut être, à titre non limitatif, un liant thermodurcissable tel qu'une résine phénolique, notamment phénol-formol, une résine époxy, polyimide, polyurée, polycarbonate. Des mélanges de noir de carbone et/ou de précurseur de carbone sont aussi envisagés. De préférence, le carbone est sous forme de noir de carbone.

Le terme "composé volatil du métal" tel qu'utilisé dans la présente description désigne un composé du métal qui passe à l'état gazeux à la température de la zone chaude de la zone réactionnelle. Cette expression recouvre aussi les mélanges susceptibles de générer un composé volatil, c'est-à-dire désigne les composés du métal qui ne sont pas en eux-mêmes volatils à la température de la zone chaude de la zone réactionnelle mais qui, par réaction avec un ou plusieurs autres constituants du mélange, libèrent un composé volatil du métal. A titre d'illustration de tels mélanges, on peut citer les mélanges d'oxyde métallique, par exemple MgO et de carbone. Parmi les composés volatils, on donnera la préférence aux produits passant en phase gazeuse stable entre 1000 et 1500°C.

Ce terme "composé volatil d'un métal", dans la mesure où il présente les caractéristiques énoncées ci-avant dans la présente description désigne donc, à titre non limitatif, les oxydes, hydroxydes, carbonates, nitrate, halogénure, nitrure, silicates, alliages métal/silicium et la forme moléculaire dudit métal.

Le terme "composé métallique" recouvre les termes "composé volatil d'un métal" et "mélange susceptible de générer un composé volatil", ainsi que les formes solide et gazeuse de ce composé ou du composé obtenu par un mélange susceptible de générer un composé volatil.

De préférence, ledit métal est le magnésium. Avantageusement, ledit composé de magnésium est l'oxyde MgO.

Le terme "amorce de cristallisation", tel qu'utilisé dans la présente invention, désigne des germes susceptibles de promouvoir la formation de cristaux.

De préférence, ils sont choisis dans le groupe consistant en $Si_3N_4$ sous forme $\alpha$ et $\beta$, SiC, $Si_2ON_2$, et autres. Avantageusement, l'amorce de cristallisation est l'$\alpha$-$Si_3N_4$.

Le procédé objet de la présente invention utilise le transport en phase gazeuse. Le mélange réactionnel, au niveau de la zone froide de la zone réactionnelle, contient le composé métallique à l'état solide déposé ou mélangé; lorsque ce mélange réactionnel progresse dans le réacteur, la température augmente et la réaction a lieu; lorsqu'enfin le mélange atteint la zone chaude il se produit un passage en phase gazeuse du composé métallique qui est entrainé par le contre-courant d'azote et se condense alors dans la zone froide. La réaction et le passage en phase gazeuse peuvent être partiellement ou totalement concomitantes. Le présent procédé conduit d'une part à un "recyclage" du composé métallique utilisé en tant que catalyseur, donc à une consommation moindre en ce composé. D'autre part, le présent procédé conduit à une poudre de nitrure de silicium dont la teneur en composé métallique est indépendante des produits de départ et qui est constante puisqu'il ne se produit pas d'accumulation du composé métallique comme dans l'art antérieur.

De plus, le présent procédé offre un contrôle trés aisé des caractéristiques de la poudre de nitrure de silicium et des conditions opératoires.

Selon un mode de réalisation de la présente invention, ladite zone réactionnelle est alimentée en deux charges, la première charge étant constituée de silice, carbone et amorce de cristallisation, la seconde charge contenant au moins ledit composé métallique volatil.

Selon une variante de ce mode de réalisation, ladite seconde charge est constituée de silice, carbone, amorce de cristallisation et dudit composé métallique volatil.

Selon une autre variante, ladite seconde charge est constituée dudit composé métallique volatil, éventuellement en mélange avec du carbone. Le carbone est présent à diverses fins; à titre d'exemples, il peut réagir avec le composé susceptible de généré un composé volatil et/ou il peut servir de liant.

En fait, ces première et seconde charges peuvent être introduites dans le réacteur selon n'importequel ordre, dans la mesure où le composé volatil est présent en une quantité suffisante pour assurer la réaction.

Selon un mode d'éxécution du présent procédé, lesdites première et seconde charges sont introduites simultanément. Les deux charges sont en fait alimentées par deux conduites distinctes et se mélangent plus ou moins dans le réacteur lui-même; la part de composé volatil s'échappant avec la poudre de nitrure de silicium étant ainsi remplacée de façon continue.

Selon un autre mode d'éxécution, lesdites première et seconde charges sont introduites alternativement. Les deux charges forment alors des strates ou couches dans le réacteur, la part de composé volatil s'échappant avec la poudre de nitrure de silicium étant ainsi remplacée périodiquement.

Le procédé selon la présente invention peut être initialisé selon toute procédure classique. Cependant une initialisation préférée consiste en ce que la zone réactionnelle est alimentée initialement en une charge contenant silice, carbone, amorce de cristallisation et un excès dudit composé volatil. Selon cette procédure d'initialisation, les charges introduites dans le réacteur rendant le fonctionnement du réacteur peuvent ne pas être de composition rigouresement constante, mais peuvent être diverses. L'excès de composé volatil est un tampon de catalyseur qui permet donc un contrôle aisé de la marche du réacteur et la production d'une poudre de nitrure de silicium de composition constante.

Dans la zone réactionnelle, ledit gradient de température est un gradient de 1000 à 1500°C. Avantageusement, ledit gradient de température est suivi d'une plage sensiblement constante à une température comprise entre 1350°C et 1500°C. Afin d'obtenir le taux de conversion recherché, le temps de séjour dans la zone réactionnelle est de 0,5 à 20 h, de préférence 1 à 10 h.

Les divers constituants sont introduits, en régime continu, en des quantités qui peuvent varier. Les poids des constituants sont calculés comme suit. La silice est exprimée en équivalent $SiO_2$, le carbone en équivalent C, le métal en équivalent moléculaire.

Ainsi, la silice et le carbone sont introduits dans le réacteur en régime continu en des quantités telles que le rapport molaire silice/carbone, exprimé en $SiO_2/C$, est compris entre 0,05 et 0,5, de préférence entre 0,1 et 0,48; l'amorce de cristallisation représente de 1 à 50% en poids, de préférence 5 à 20% de la silice.

La quantité de composé du métal peut varier dans de larges limites dans la mesure où, en régime continu, elle peut être nulle et la quantité maximale n'est en fait fixée que par la consommation de ce composé, c'est-à-dire son départ avec la poudre de nitrure extraite du réacteur.

Les proportions initiales des constituants sont celles indiquées plus haut, s'agissant de $SiO_2$, carbone et amorce. Quant à la quantité initiale de composé du métal, elle peut varier d'environ 0,1% en poids par rapport à $SiO_2$ à un maximum n'excédant pas en mole la quantité de carbone dans le cas de l'introduction des deux charges, la première constituée de silice, carbone et amorce, la seconde constituée de silice, carbone, amorce et composé métallique. Dans le cas où la seconde charge est constituée dudit composé métallique, éventuellement en mélange avec du carbone, la quantité initiale peut représenter 100% de la charge (métal pur) ou être telle que les proportions soient stoechiométriques pour la réaction entre le composé du métal et l'autre constituant conduisant à un composé volatil, par exemple du carbone. Lors de l'initialisation par l'intoduction d'une charge composée de silice, carbone, amorce, et composé métallique, ce dernier représente de préférence au moins 0,5% du poids de la silice.

Les différents constituants peuvent être introduits dans le réacteur en mélange se présentant sous diverses formes, pulvérulente, granulée, pastillée, extrudée. D'autres ingrédients peuvent être ajoutés à ce mélange, par exemple pour en faciliter la mise en forme. Ces ingrédients peuvent être l'eau, un solvant organique, un liant, etc. Préférentiellement la charge est sous forme d'extrudats.

La poudre fine de nitrure de silicium obtenue par le procédé selon la présente invention possède une aire spécifique inférieure à 20 m²/g, est de forme sensiblement sphérique. La dimension des grains est comprise entre 0,2 et 1 µm et cette poudre contient moins de 2% en poids d'impuretés, autres que C et $O_2$.

La présente invention est décrite plus en détails par les exemples suivants donnés à titre illustratif et non limitatif de la portée de la présente invention, susceptible de nombreuses variantes aisément accessibles à l'homme de l'art.

## EXEMPLES

### Exemple 1

Dans un malaxeur en Z, on mélange 60 g de silice fine (dénommination commerciale Levilite, Rhône-Poulenc), 6 g de nitrure de silicium (dénommination commerciale LC 12, Starck), 2,3 g de magnésie (Prolabo), 30 g de noir d'acétylène (dénommination commerciale Y50A, SN2A), 50 g de résine phénol-formol (dénommination commerciale R3593, CECA) et 50 g d'eau déminéralisée. La pâte ainsi obtenue est extrudée en diamètre 4 mm et séchée à 150°C.

De la même manière, on fabrique des extrudats identiques aux précédents, mais ne contenant pas de magnésie.

Dans un four tubulaire équipé d'un tube d'alumine de diamètre intérieur 45 mm, on introduit 78 g de granulés contenant la magnésie (soit 17 cm de hauteur) puis 141 g de granulés n'en contenant pas (soit 32 cm de hauteur).

Le four tubulaire est équipé d'un thermocouple de régulation. Le tube d'alumine est soutenu par un câble relié à un moteur électrique par l'intermédiaire de deux poulies. A son extrémité inférieure, le tube est fermé par un bouchon percé pour laisser arriver l'azote et enfiler un thermocouple protégé par une gaine d'alumine. A son extrémité supérieure, le tube est fermé par un bouchon muni d'un piquage pour laisser sortir l'azote et le monoxyde de carbone issu de la réaction. A l'intérieur du tube d'alumine, un ensemble de bagues en graphite permet de supporter un creuset dont le fond est percé pour laisser circuler l'azote. Au-dessus du creuset, les bagues en graphite contiennent la charge. Les granulés contenant le magnésium sont placés dans le volume constitué par le creuset et les premières bagues placées dessus. Les granulés exempts de magnésium sont placés au-dessus.

Initialement, le fond du creuset est placé au-dessus du centre du four, à une hauteur telle que lorsque le four est préchauffé à 1 480°C, les granulés placés au fond du creuset soient à une température inférieure à 1 200°C.

Une fois le four préchauffé à 1 480°C environ, le tube d'alumine et son contenu subissent un mouvement descendant grâce au moteur, soit 0,9 cm/h. L'azote est envoyé de bas en haut suivant un débit de 18 l h. Le gaz réactif et les granulés circulent donc à contre-courant. Après 53 heures d'essai, la quasi-totalité de la charge a traversé la zone chaude du four. Aucun whisker, aucune trace de produit issu du transport de $SiO_{(g)}$ n'est visible. Les analyses effectuées après élimination du carbone excédentaire montrent que ce résultat est dû au passage en phase gazeuse d'un composé du magnésium. Sans vouloir être liée d'aucune sorte, la demanderesse pense qu'il s'agit vraisemblablement de $Mg_{(g)}$ ou de $Mg_3N_{2(g)}$. En effet, après élimination à l'air à 650°C du carbone excédentaire des granulés, tous les produits ont une composition identique. Les granulés n'ayant pu, au moment de l'arrêt de l'essai, arriver dans la zone du four à plus de 1 450°C contiennent plus de magnésium que les autres, ce qui démontre l'existence d'un mécanisme de passage en phase gazeuse, transport vers le haut du four grâce à la circulation à contre-courant et condensation d'un composé du magnésium grâce au gradient thermique.

Le tableau ci-après résume les caractéristiques des produits finaux obtenus:

| Origine produit analysé * | N(%) | O(%) | C(%) | Mg(%) | $\alpha/\alpha+\beta$ | autres phases | Aire BET (m²/g) |
|---|---|---|---|---|---|---|---|
| Granulés contenant initialement MgO | 41 | 1,15 | <0,2 | 0,4 | 0,99 | - | env. 4 |
| Granulés sans MgO au départ, ayant totalement réagi | 40 | 1,13 | <0,2 | 0,5 | 0,99 | - | env. 4 |
| Granulés sans MgO au départ, n'ayant pas totalement réagi | 30 | 12 | 0,3 | 3,35 | | amorphe + $MgSiN_2$ env. 5% | |

\* après èlimination du carbone excèdentaire.

Une micro-analyse X au microscope électronique à balayage montre que le magnésium résiduaire dans le nitrure est uniformément réparti.

### Exemple 2

Dans cet exemple, la première partie de la charge, au lieu d'être constituée de granulés contenant de la silice, de la magnésie et du carbone, est constituée de granulés de contenant que de la magnésie, du carbone et un liant.

Dans un malaxeur en Z, on introduit 6 g de MgO (Prolabo), 48 g de noir d'acétylène (Y50A, société SN2A), 22 g de résine formol-phénol (R3593, CECA), 50 g d'eau distillée. Le mélange est extrudé en diamètre 4 mm et les extrudats sont séchés à 150°C.

Des granulés identiques à ceux de l'exemple 1, ne contenant pas de magnésie, sont également préparés.

Dans le même dispositif expérimental qu'à l'exemple 1, on introduit 36 g de granulés à base de magnésie (soit 11 cm), puis 165 g de granulés à base de silice (soit 38 cm).

Le four est préchauffé à 1 480°C, et l'ensemble tube d'alumine et granulés mis en mouvement descendant, à une vitesse de 0,9 cm/h. Un courant d'azote de 24 l/h est envoyé à contre-courant du mouvement des granulés. Après 48 heures d'essai, tous les granulés contenant initialement la magnésie et la majeure partie de ceux-contenant la silice ont traversé la zone chaude du four. On ne trouve aucune trace de whiskers de nitrure de silicium, ni de produits pouvant résulter de transport et décomposition de $SiO_{(g)}$.

Les analyses après élimination à l'air à 650°C du carbone excédentaire montrent que toute la magnésie présente initialement dans les granulés a disparu. Elle se retrouve sous forme de composé du magnésium dans le nitrure de silicium, et, en plus forte proportion, dans les granulés n'ayant pas totalement réagi lors de l'arrêt de l'essai. Ceci prouve le mécanisme d'évaporation-transport en phase gazeuse-condensation des composés de Mg. Four les granulés contenant la magnésie ayant réagi, la perte à l'air à 650°C est de 99,2%, donc sensiblement tout le Mg a disparu.

Le tableau ci-après résume les caractéristiques des produits finaux obtenus:

| Origine produit analysé * | N(%) | O(%) | C(%) | Mg(%) | $\alpha/\alpha+\beta$ | autres phases | Aire BET ($m^2/g$) |
|---|---|---|---|---|---|---|---|
| Granulés à base de silice ayant totalement réagi | 39 | 1,3 | 0,5 | 0,6 | 0,99 | | env. 7 |
| Granulés à base de silice n'ayant pas totalement réagi | 36 | 2,4 | 0,4 | 9,9 | | $MgSiN_2$ | |

* après èlimination du carbone excèdentaire.

Le microscope électronique à balayage montre que le nitrure est constitué de grains élémentaires quasi-sphériques. Grâce à son aire spécifique d'environ 7 $m^2/g$, ce nitrure est particulièrement intéressant pour le moulage-injection. Dans le présent procédé, la quantité de Mg présente dans le four peut être contrôlée par la proportion des deux types de granulés introduits.

<u>Exemple 3</u>

Cet exemple illustre aussi le fonctionnement en continu faisant l'objet de la présente invention.
On prépare deux mélanges de compositions:

- <u>mélange 1</u>: 79,2 kg de silice, 31,4 kg de noir d'acétylène, 9,1 kg de résine phénol-formol, 3,2 kg de magnésie, 7,9 kg de $Si_3N_4$ et de l'eau déminéralisée;
- <u>mélange 2</u>: 790 kg de silice, 314 kg de noir d'acétylène, 91 kg de résine phénol-formol, 79 kg de $Si_3N_4$ et de l'eau déminéralisée.

Les mélanges ainsi préparés sont extrudés en diamètre 4,5 mm, et les extrudats séchés à 150°C.
Le réacteur est un tube vertical en graphite de rapport longueur/diamètre de 10. Initialement, le tube est rempli de granulés inertes (carbone + liant). Ce tube est chauffé à mi-hauteur à une température comprise entre 1400 et 1500°C. Un courant d'azote de 6 kg/h est envoyé par le bas du tube graphite, et évacué par le haut. Dans un premier temps, les granulés inertes sont soutirés par le bas du four et, avec le même débit, le haut du four est alimenté par des granulés provenant du mélange 1 (présence de MgO). Du fait de la circulation à contre-courant de l'azote et des granulés, un profil thermique variant de 400°C environ en haut du réacteur à 1430°C à mi-hauteur s'établit. Le soutirage de l'alimentation sont maintenues en permanence. Après 9 heures pendant lesquelles sont introduits régulièrement 42 kg de granulés issus du mélange 1, on poursuit l'alimentation en utilisant des granulés du mélange 2. Cette alimentation est poursuivie pendant 140 heures à un débit de 1,65 kg/h de granulés. En bas du four, les granulés sont soutirés à un débit correspondant, après élimination du carbone excédentaire, à 0,6 kg/h de $Si_3N_4$.
Après cette période de fonctionnement continu, aucun whisker, ni aucune trace de transport de $SiO_{(g)}$ n'est détectée. Le nitrure de silicium produit a une composition chimique indépendante de la présence ou non de magnésie dans les granulés dont il provient. Sa surface spécifique (BET) est de 6 $m^2/g$ environ, et la teneur en Mg résiduaire de 0,5%. Le rapport $\alpha Si_3N_4/(\alpha Si_3N_4 + \beta Si_3N_4)$ est supérieur à 98%.

**Revendications**

1. Procédé de fabrication de poudre fine de nitrure de silicium comprenant la réaction, à contre-courant d'azote, et en continu, de silice, carbone et amorce de cristallisation, en présence d'un composé volatil d'un métal choisi dans le groupe consistant en Be, Mg, Ca, Sr, Ge, Sn, Ti, Hf, Na et Ba, dans une zone réactionnelle présentant un gradient de température, comprenant une zone chaude dans laquelle ledit composé métallique passe à l'état gazeux et une zone froide dans laquelle se condense ledit composé métallique à l'état gazeux, ledit composé métallique à l'état gazeux étant entraîné de la zone chaude vers la zone froide par le contre-courant d'azote.

2. Procédé selon la revendication 1, caractérisé en ce que ladite zone réactionnelle est alimentée en deux charges, la première charge étant constituée de silice, carbone et amorce de cristallisation, la seconde charge contenant au moins ledit composé métallique volatil.

3. Procédé selon la revendication 2, caractérisé en ce que ladite seconde charge est constituée de silice, carbone, amorce de cristallisation et dudit composé métallique volatil.

4. Procédé selon la revendication 2, caractérisé en ce que ladite seconde charge est constituée et dudit composé métallique volatil, éventuellement en mélange avec du carbone.

5. Procédé selon l'une-quelconque des revendications 2 à 4, caractérisé en ce que lesdites première et seconde charges sont introduites simultanément.

6. Procédé selon l'une quelconque des revendications 2 à 5, caractérisé en ce que lesdites première et seconde charges sont introduites alternativement.

7. Procédé selon l'une quelconque des revendications 1 à 6, caractérisé en ce que la zone réactionnelle est alimentée initialement en une charge contenant silice, carbone, amorce de cristallisation et un excès dudit composé métallique volatil.

8. Procédé selon l'une quelconque des revendications 1 à 9, caractérisé en ce que ledit gradient de température est un gradient de 1000 à 1500°C.

9. Procédé selon l'une quelconque des revendications 1 à 8, caractérisé en ce que ledit gradient de température est suivi d'une plage sensiblement constante à une température comprise entre 1350°C et 1500°C.

10. Procédé selon l'une quelconque des revendications 1 à 9, caractérisé en ce que le temps de séjour dans la zone réactionnelle est de 0,5 à 20 h, de préférence 1 à 10 h.

11. Procédé selon l'une quelconque des revendications 1 à 10, caractérisé en ce que ledit métal est le magnésium.

12. Procédé selon la revendication 11, caractérisé en ce que ledit composé de magnésium est MgO.

13. Procédé selon l'une quelconque des revendications 1 à 12, caractérisé en ce que la silice est sous la forme $SiO_2$.

14. Procédé selon l'une quelconque des revendications 1 à 13, caractérisé en ce que le carbone est sous forme de noir de carbone.

15. Procédé selon l'une quelconque des revendications 1 à 14, caractérisé en ce que le rapport silice/carbone, exprimé en $SiO_2/C$, est compris entre 0,05 et 0,5, de préférence entre 0,1 et 0,48.

16. Procédé selon l'une quelconque des revendications 1 à 15, caractérisé en ce que l'amorce de cristallisation est choisie dans le groupe consistant en $Si_3N_4$ sous forme $\alpha$ et $\beta$, SiC, $Si_2ON_2$.

17. Procédé selon la revendication 16, caractérisé en ce que l'amorce de cristallisation est l'$\alpha$-$Si_3N_4$.

18. Procédé selon l'une quelconque des revendications 1 à 17, caractérisé en ce que l'amorce de cristallisation représente de 1 à 50 % en poids, de préférence 5 à 20 de la silice.

19. Procédé selon l'une quelconque des revendications 1 à 18, caractérisé en ce que la charge est sous forme d'extrudats.

**Claims**

1. Process for the manufacture of fine powder of silicon nitride, comprising the reaction, in a nitrogen countercurrent and in continuous fashion, of silica, carbon and a need crystal, in the presence of a volatile compound of a metal chosen from the group consisting of Be, Mg, Ca, Sr, Ge, Sn, Ti, Hf, Na and Ba, in a reaction zone possessing a temperature gradient, comprising a hot zone in which the said metal compound passes into the gaseous state and a cold zone in which the said metal compound in the gaseous state condenses, the said metal compound in the gaseous state being carried from the hot zone to the cold zone by the nitrogen countercurrent.

2. Process according to Claim 1, characterised in that the said reaction zone is fed with two charges, the first charge consisting of silica, carbon and seed crystal, the second charge containing at least the said volatile metal compound.

3. Process according to Claim 2, characterised in that the said second charge consists of silica, carbon, seed crystal and the said volatile metal compound.

4. Process according to Claim 2, characterised in that the said second charge consists of the said volatile metal compound, optionally mixed with carbon.

5. Process according to any one of Claims 2 to 4, characterised in that the said first and second charges are introduced simultaneously.

6. Process according to any one of Claims 2 to 5, characterised in that the said first and second charges are introduced alternately.

7. Process according to any one of Claims 1 to 6, characterised in that the reaction zone is fed initially with a charge containing silica, carbon, seed crystal and an excess of the said volatile metal compound.

8. Process according to any one of Claims 1 to 9, characterised in that the said temperature gradient is a gradient from 1000 to 1500°C.

9. Process according to any one of Claims 1 to 8, characterised in that the said temperature gradient is followed by a substantially constant region at a temperature of between 1350°C and 1500°C.

10. Process according to any one of Claims 1 to 9, characterised in that the residence time in the reaction zone is from 0.5 to 20 h, and preferably 1 to 10 h.

11. Process according to any one of Claims 1 to 10, characterised in that the said metal is magnesium.

12. Process according to Claim 11, characterised in that the said magnesium compound is MgO.

13. Process according to any one of Claims 1 to 12, characterised in that the silica is in the form of $SiO_2$.

14. Process according to any one of Claims 1 to 13, characterised in that the carbon is in the form of carbon black.

15. Process according to any one of Claims 1 to 14, characterised in that the silica/carbon ratio, expressed as $SiO_2/C$, is between 0.05 and 0.5, and preferably between 0.1 and 0.48.

16. Process according to any one of Claims 1 to 15, characterised in that the seed crystal is chosen from the group consisting of $Si_3N_4$ in $\alpha$ and $\beta$ form, SiC and $Si_2ON_2$.

17. Process according to Claim 16, characterised in that the seed crystal is $\alpha$-$Si_3N_4$.

18. Process according to any one of Claims 1 to 17, characterised in that the seed crystal represents from 1 to 50 % by weight, and preferably 5 to 20, of the silica.

19. Process according to any one of claims 1 to 18, characterised in that the charge is in the form of extrudates.

**Patentansprüche**

1. Verfahren zur Herstellung von feinpulvrigem Siliciumnitrid, das die in einem Stickstoffgegenstrom und kontinuierlich ablaufende Reaktion von Siliciumdioxid, Kohlenstoff und einem Kristallisationsstarter in Gegenwart einer flüchtigen Verbindung eines Metalls, das aus der Gruppe von Be, Mg, Ca, Sr, Ge, Sn, Ti, Hf, Na und Ba ausgewählt ist, in einer Reaktionszone umfaßt, die einen Temperaturgradienten aufweist mit einer heißen Zone, in der die Metallverbindung in den gasförmigen Zustand übergeht, und einer kalten Zone, in der die im gasförmigen Zustand befindliche Metallverbindung kondensiert, wobei die im gasförmigen Zustand befindliche Metallkomponente durch den Stickstoffgegenstrom von der heißen Zone in die kalte Zone mitgerissen wird.

2.  Verfahren nach Anspruch 1, dadurch gekennzeichnet, daß die Reaktionszone mit zwei Chargen beschickt wird, wobei die erste Beschickung aus Siliciumdioxid, Kohlenstoff und Kristallisationsstarter besteht und die zweite Beschickung mindestens die flüchtige Metallverbindung enthält.

3.  Verfahren nach Anspruch 2, dadurch gekennzeichnet, daß die zweite Beschickung aus Siliciumdioxid, Kohlenstoff, Kristallisationsstarter und der flüchtigen Metallverbindung besteht.

4.  Verfahren nach Anspruch 2, dadurch gekennzeichnet, daß die zweite Beschickung aus der flüchtigen Metallverbindung, gegebenenfalls in Mischung mit Kohlenstoff, besteht.

5.  Verfahren nach einem der Ansprüche 2 bis 4, dadurch gekennzeichnet, daß die erste und zweite Beschickung gleichzeitig erfolgen.

6.  Verfahren nach einem der Ansprüche 2 bis 5, dadurch gekennzeichnet, daß die erste und zweite Beschickung abwechselnd erfolgen.

7.  Verfahren nach einem der Ansprüche 1 bis 6, dadurch gekennzeichnet, daß der Reaktionszone anfänglich mit einer Charge aus Siliciumdioxid, Kohlenstoff, Kristallisationsstarter und einem Überschuß der flüchtigen Metallverbindung beschickt wird.

8.  Verfahren nach einem der Ansprüche 1 bis 7, dadurch gekennzeichnet, daß der Temperaturgradient ein Gradient von 1000 bis 1500 °C ist.

9.  Verfahren nach einem der Ansprüche 1 bis 8, dadurch gekennzeichnet, daß sich dem Temperaturgradienten ein nahezu konstanter Bereich bei einer Temperatur zwischen 1350 °C und 1500 °C anschließt.

10. Verfahren nach einem der Ansprüche 1 bis 9, dadurch gekennzeichnet, daß die Verweildauer in der Reaktionszone 0,5 bis 20 Stunden, vorzugsweise 1 bis 10 Stunden, beträgt.

11. Verfahren nach einem der Ansprüche 1 bis 10, dadurch gekennzeichnet, daß das Metall Magnesium ist.

12. Verfahren nach Anspruch 11, dadurch gekennzeichnet, daß die Magnesiumverbindung MgO ist.

13. Verfahren nach einem der Ansprüche 1 bis 12, dadurch gekennzeichnet, daß das Siliciumdioxid in Form von $SiO_2$ vorliegt.

14. Verfahren nach einem der Ansprüche 1 bis 13, dadurch gekennzeichnet, daß der Kohlenstoff in Form von Ruß vorliegt.

15. Verfahren nach einem der Ansprüche 1 bis 14, dadurch gekennzeichnet, daß das Siliciumdioxid/Kohlenstoff-Verhältnis, berechnet als $SiO_2$/C, zwischen 0,05 und 0,5, vorzugsweise zwischen 0,1 und 0,48, liegt.

16. Verfahren nach einem der Ansprüche 1 bis 15, dadurch gekennzeichnet, daß der Kristallisationsstarter ausgewählt ist aus der Gruppe von $\alpha$- und $\beta$-$Si_3N_4$, SiC und $Si_2ON_2$.

17. Verfahren nach Anspruch 16, dadurch gekennzeichnet, daß der Kristallisationsstarter $\alpha$-$Si_3N_4$ ist.

18. Verfahren nach einem der Ansprüche 1 bis 17, dadurch gekennzeichnet, daß der Kristallisationsstarter 50 Gew.-%, vorzugsweise 5 bis 20 Gew.-%, des Siliciumdioxids darstellt.

19. Verfahren nach einem der Ansprüche 1 bis 18, dadurch gekennzeichnet, daß die Beschickung in Form eines Extrudats vorliegt.